# EUROPÄISCHE PATENTSCHRIFT

(11) **EP 2 735 991 B1**
(45) Veröffentlichungstag und Bekanntmachung des Hinweises auf die Patenterteilung: **19.08.2015**
(21) Anmeldenummer: 13192726.1
(22) Anmeldetag: 13.11.2013
(51) Int. Cl.: G06F 21/45, G06F 21/62, G06F 21/34, H04L 29/06, G06F 21/60, G06Q 20/38

(54) **Computerimplementiertes Verfahren zum Ersetzen eines Datenstrings**
Computer implemented method for replacing a data string
Procédé implémenté par ordinateur pour le remplacement d'une chaîne de données

(30) Priorität: 23.11.2012 DE 102012111383
(43) Veröffentlichungstag der Anmeldung: 28.05.2014
(73) Patentinhaber: comForte 21 GmbH, 65189 Wiesbaden (DE)
(72) Erfinder: Horst, Michael, 16816 Wuthenow (DE)
(74) Vertreter: WSL Patentanwälte Partnerschaft mbB

(56) Entgegenhaltungen:
- EP-A2- 2 363 839
- US-A1- 2005 137 969
- US-A1- 2011 154 466
- US-A1- 2011 261 958
- Michael Stephenson ET AL: "Tokenization -A New Approach to Fully Comply with PCI 3.4 and Improve Data Security", The Connection, 1. Oktober 2011 (2011-10-01), Seite 20,21,36,37, XP055107853, Gefunden im Internet: URL:http://www.comforte.com/ecomaXL/get_bl ob.php?name=Tokenization_-_A_New_Approach_ to_Fully_Comply_with [gefunden am 2014-03-14]

## Beschreibung

Die vorliegende Erfindung betrifft ein computerimplementiertes Verfahren zum Ersetzen eines sicherheitsrelevanten, unverschlüsselten Datenstrings aus einem Datensatz durch einen Token in einer Tokenisierungseinrichtung.

Als typische Architektur für den bargeldlosen Zahlungsverkehr haben sich Systeme etabliert, bei denen ein Zahlungsverkehrsabwickler über ein Netzwerk eine Vielzahl von Verkaufsstellen sowie Geldautomaten auf der einen Seite und eine Vielzahl von Kartenanbietern sowie eine Vielzahl von Zahlungsausgleichsystemen auf der anderen Seite mit einem zentralen Server verbindet, welcher die einzelnen Transaktionen verwaltet und steuert.

Als Herausforderung erweist sich dabei, dass Datensätze, welche vertrauenswürdige Datenstrings, wie beispielsweise Karten- oder Kontonummern, in der folgenden Anmeldung auch als PANs (Englisch: Primary Account Numbers) abgekürzt, enthalten, nicht nur übertragen, sondern auch verarbeitet und gespeichert werden müssen. Insbesondere müssen die gespeicherten und auf dem Server in der Verarbeitung befindlichen PANs vor dem Zugriff und dem Einblick Dritter geschützt werden, um einen Missbrauch des Zahlungssystems zu verhindern.

Zur geschützten Verarbeitung und Speicherung von Datensätzen, welche PANs enthalten, wurden Verfahren zur Tokenisierung der im Klartext empfangenen PANs, d.h. zum Ersetzen dieser Klartext-PANs durch den PANs eindeutig zugeordnete zufällige Token, entwickelt. Da die Tabellen mit der Zuordnung zwischen den ersetzten PANs und den Token getrennt von den Verarbeitungsprogrammen sicher gespeichert werden, besteht für einen Dritten keine Möglichkeit, aus den in der Verarbeitung befindlichen Datensätzen, welche mit Hilfe der Token pseudonymisiert sind, auf die zugehörigen PANs zurückzuschließen.

Eine entsprechende Architektur wird in Stephenson M. ET AL: "Tokenization- A New Approach to Fully Comply with PCI 3.4 and Improve Data Security", The Connection, 1. Oktober 2011 offenbart.

Dabei wird im Sinne der vorliegenden Erfindung unter einer Tokenisierung ein Verfahren zum Ersetzen eines Datenstrings durch einen Stellvertreterstring, welcher auch als Token bezeichnet wird, verstanden. Unabdingbare Anforderungen an die Tokenisierung sind dabei die Umkehrbarkeit des Verfahrens, d.h. jeder Token muss sich unzweideutig wieder auf den ursprünglichen Datenstring abbilden lassen, und die Formaterhaltung der Tokenisierung, um den Datensatz, in welchem ein unverschlüsselter Datenstring durch einen Token ersetzt wurde, weiterverarbeiten, insbesondere speichern, zu können.

Eine Möglichkeit, um sicherheitsrelevante Datenstrings durch Token zu ersetzen, ist die Verwendung einer Ersetzungstabelle, welche für jeden eingehenden Datenstring einen zufällig generierten Token enthält, der den unverschlüsselten Datenstring ersetzt. Eine solche Ersetzungstabelle weist jedoch den Nachteil auf, dass an irgendeiner Stelle nach dem Ersetzen der Datenstrings die Zuordnung zwischen den Datenstrings und den Token gespeichert werden muss, denn nur diese Zuordnung ermöglicht es, einen Datenstring aus dem Token wiederherzustellen, wenn der Datensatz an eine andere Instanz zur Weiterverarbeitung übergeben werden muss.

Alternativ kann die Tokenisierung auch durch eine bijektive mathematische Funktion erfolgen, welche auf den zu verschlüsselnden Datenstring angewandt wird und die eine eindeutige Abbildung des unverschlüsselten Datenstrings auf den Token und des Token auf den unverschlüsselten Datenstring bereitstellt.

Während Ersetzungstabellen den Nachteil haben, dass sie einen großen Bedarf an Speicherkapazität sowie gegebenenfalls spezielle Anforderungen für den Synchronbetrieb mehrerer Systeme für eine verbesserte Ausfallsicherheit nach sich ziehen, birgt die Erzeugung von Token mit Hilfe einer auf den zu ersetzenden Datenstring angewendeten mathematischen Funktion nicht unerhebliche Sicherheitsrisiken.

Mögliche Angriffe auf Systeme, welche versuchen, Daten sicher mit Hilfe einer Tokenisierung zu verarbeiten, sind ein Zugriff auf das Verfahren zum Ersetzen der ursprünglichen Datenstrings durch die Token oder ein Zugriff auf den Wiederherstellungsprozess, welcher es ermöglicht, die ursprünglichen Datenstrings aus den Token wiederherzustellen.

Wer die Verschlüsselungsfunktion eines Tokenisierungsverfahrens, bei welchem der Token mathematisch aus dem ursprünglichen unverschlüsselten Datenstring erzeugt wird, kennt, hat einen Zugriff auf alle derzeitigen und auch auf alle zukünftigen mit diesem Algorithmus erzeugten Token. Hingegen sind Algorithmen, die auf der Zuordnung des unverschlüsselten Datenstring zu einem zufällig erzeugten Token beruht, sicherer, da insbesondere nicht von einem Datestring/Token-Paar auf zukünftige Datenstring/Token-Paare geschlossen werden kann.

Demgegenüber ist es Aufgabe der vorliegenden Erfindung, ein Verfahren zum Ersetzen eines sicherheitsrelevanten Datenstrings aus einem Datensatz durch einen Token bereitzustellen, welches effizienter arbeitet als eine Ersetzungstabelle mit zufällig generierten Token und/oder das sicherer ist als die Erzeugung von Token durch ausschließliches Anwenden einer mathematischen Funktion auf den unverschlüsselten Datenstring.

Zumindest eine der vorgenannten Aufgaben wird durch ein computerimplementiertes Verfahren zum Ersetzen eines sicherheitsrelevanten, unverschlüsselten Datenstrings aus einem Datensatz durch einen Token in einer Tokenisierungseinrichtung gelöst, wobei das Verfahren die Schritte aufweist: Empfangen des sicherheitsrelevanten, unverschlüsselten Datenstrings von einer Verarbeitungseinrichtung Erzeugen eines dem unverschlüsselten Datenstring zugeordneten Token mit den Schritten Bereitstellen einer Ersetzungstabelle mit zufälligen Einträgen, wobei jedem Eintrag ein Index der Ersetzungstabelle zugeordnet ist, Aufteilen des unverschlüsselten Datenstrings in zwei Teilstrings, wobei der erste Teilstring nur aus dem ersten Zeichen des unverschlüsselten String besteht und der zweite Teilstring aus den restlichen Zeichen des unverschlüsselten String besteht, Berechnen eines Index der Ersetzungstabelle aus dem zweiten Teilstring, so dass ein Eintrag der Ersetzungstabelle bestimmt wird, Erzeugen eines Ersetzungszeichens aus dem von dem Index bestimmten Eintrag, Ersetzen des einzigen Zeichens des ersten Teilstrings durch das Ersetzungszeichen, Vertauschen des ersten und des zweiten Teilstrings, so dass das ersetzte Zeichen des ersten Teilstrings das letzte Zeichen oder das erste Zeichen des zweiten Teilstrings wird und das erste Zeichen oder das letzte Zeichen des zweiten Teilstrings das einzige Zeichen des ersten Teilstrings wird, und Wiederholen der vorstehenden Schritte, sodass ein dem unverschlüsselten Datenstring zugeordneter Token erzeugt wird, Übergeben des Token an die Verarbeitungseinrichtung, Empfangen des Token von der Verarbeitungseinrichtung, Wiederherstellen des unverschlüsselten Datenstring aus dem Token, der dem unverschlüsselten Datenstring zugeordnet ist, mit den Schritten Bereitstellen der Ersetzungstabelle, Aufteilen des Token in zwei Teilstrings, wobei der erste Teilstring aus allen Zeichen außer dem letzten Zeichen des Token besteht und der zweite Teilstring nur aus dem letzten Zeichen des Token besteht, Berechnen eines Index der Ersetzungstabelle aus dem ersten Teilstring, so dass ein bestimmter Eintrag der Ersetzungstabelle bestimmt wird, Erzeugen eines Ersetzungszeichens aus dem von dem Index bestimmten Eintrag der Ersetzungstabelle, so dass das einzige Zeichen des zweiten Teilstrings durch das Ersetzungszeichen ersetzt wird, Vertauschen des ersten und des zweiten Teilstrings, so dass das einzige Zeichen des zweiten Teilstrings das erste Zeichen oder das letzte Zeichen des ersten Teilstrings wird und das letzte Zeichen oder das erste Zeichen des ersten Teilstrings das einzige Zeichen des zweiten Teilstrings wird, und Wiederholen der vorstehenden Schritte, sodass der dem Token zugeordnete unverschlüsselten Datenstring wiederhergestellt wird, Übergeben des unverschlüsselten Datenstrings an die Verarbeitungseinrichtung.

Das erfindungsgemäße computerimplementierte Verfahren zum Ersetzen eines sicherheitsrelevanten Datenstrings beruht auf einer Tokenisierung des Datenstrings, wobei der unverschlüsselte Datenstring aus einem Datensatz durch einen Token ersetzt wird.

Unter einem Datenstring im Sinne der vorliegenden Anmeldung wird jedwede Art von Zeichenfolge verstanden. Ein Datensatz setzt sich aus einem oder mehreren solcher Datenstrings zusammen. Dabei können die Datenstrings in einem Datensatz voneinander abgesetzt oder auf sonstige Weise markiert sein, sie müssen es aber nicht. Insbesondere kann ein Datensatz aus einer einzigen Zeichenfolge bestehen, die eine Mehrzahl von Datenstrings umfasst. Eine Ausgestaltung eines Datensatzes im Sinne der vorliegenden Erfindung ist eine Nachricht, welche den unverschlüsselten Datenstring oder den Token umfasst.

Ein Datensatz kann in einer Ausführungsform eine Finanztransaktion beschreibende Nachricht sein, welche beispielsweise Informationen über Ort, Gegenstand und Preis der Transaktion enthält.

In einer solchen Ausführungsform kann der unverschlüsselte Datenstring im Sinne der vorliegenden Anmeldung dann insbesondere zumindest ein Teilstring einer sogenannten Primary Account Number (PAN) sein, d.h. einer ein Konto oder eine Zahlungskarte identifizierenden Ziffernfolge. Jedoch könnte jeder andere Datenstring mit dem gleichen Verfahren tokenisiert und auf diese Weise sicher verarbeitet werden.

Das erfindungsgemäße Verfahren kombiniert die Vorteile der beiden eingangs genannten Verfahren zum Tokenisieren von Datenstrings. Jeder einem ursprünglichen unverschlüsselten Datenstring zugeordnete Token wird zum Einen durch in einer Nachschlage- bzw. Ersetzungstabelle gespeicherte zufällige Zeichen generiert, zum Anderen jedoch durch eine Funktion, welche auf den zu ersetzenden Datenstring selbst angewandt wird und im Ergebnis dann auf die ersetzenden Zeichen verweist.

Dabei dient eine auf den ursprünglichen Datenstring angewandte mathematische Funktion dem Berechnen eines Index, der denjenigen Eintrag der Ersetzungstabelle bestimmt, welcher als nächstes zum Ersetzen eines Teils des unverschlüsselten Datenstrings verwendet werden soll.

Entsprechend realisiert das erfindungsgemäße Verfahren eine Tokenisierung, welche effizienter ist als eine Tokenisierung, die rein auf der Zuordnung von zufällig erzeugten Token zu dem ursprünglichen Datenstring beruht. Es ist gleichzeitig sicherer als ein Verfahren zum Tokenisieren, welches ausschließlich auf einer Funktion beruht, welche auf mathematische Weise aus dem ursprünglichen Datenstring einen Token ableitet bzw. generiert.

Das erfindungsgemäße Verfahren kombiniert die beiden zunächst konträren Verfahren miteinander, sodass das Erzeugen des Token aus dem unverschlüsselten Datenstring zum Teil dadurch erfolgt, dass ein Index auf die Ersetzungstabelle mathematisch aus dem unverschlüsselten Datenstring selbst generiert wird, die einzelnen Zeichen des unverschlüsselten Datenstrings jedoch durch zufällige Ersetzungswerte, die aus der Ersetzungstabelle abgeleitet werden, ersetzt werden.

Das erfindungsgemäße Erzeugen des Token basiert auf einem Feistelnetzwerk, nämlich auf einem maximal unbalancierten Feistelnetzwerk, bei welchem der unverschlüsselte Datenstring zur Erzeugung des Token zunächst in zwei Teilstrings zerlegt wird, wobei der erste Teilstring nur aus einem einzigen Zeichen des unverschlüsselten Strings besteht und der zweite Teilstring aus den restlichen Zeichen des unverschlüsselten Strings besteht.

Das erfindungsgemäße Verfahren macht es insbesondere überflüssig, den ersetzten unverschlüsselten Datenstring in die Ersetzungstabelle zu schreiben, da die Wiederherstellung ausschließlich mit Hilfe des Token, der Berechnung des Index der Ersetzungstabelle sowie des entsprechenden Eintrags der Ersetzungstabelle erfolgen kann. Auf diese Weise kann die Ersetzungstabelle vollständig vorab generiert und beispielsweise auf Backup-Systeme verteilt werden. Eine spätere Synchronisierung zwischen in verschiedenen Systemen gehaltenen identischen Ersetzungstabellen zu einem späteren Zeitpunkt ist nicht erforderlich. Kollisionen werden inhärent vermieden.

Unter einer Tokenisierungseinrichtung im Sinne der vorliegenden Anmeldung wird eine Einrichtung, insbesondere aber ein Programm oder ein Programmabschnitt verstanden, welche das Erzeugen des Token sowie das Wiederherstellen des unverschlüsselten Datenstrings ausführt.

Eine Verarbeitungseinrichtung im Sinne der vorliegenden Anmeldung ist irgendeine Einrichtung, insbesondere aber ein Programm oder ein Programmabschnitt, welche vorzugsweise einen Datensatz verarbeitet und in diesem beispielsweise eine Ersetzung des unverschlüsselten Datenstrings durch den Token und umgekehrt durchführt.

In einer Ausführungsform ist die Verarbeitungseinrichtung eine Abfangeinrichtung auf einem Datenkanal, welche die Schritte ausführt: Abfangen eines über den Datenkanal in einer ersten Richtung übertragenen Datensatzes, Identifizieren des sicherheitsrelevanten, unverschlüsselten Datenstrings in dem abgefangenen Datensatz, Übergeben des sicherheitsrelevanten, unverschlüsselten Datenstrings an die Tokenisierungseinrichtung zum Erzeugen eines Token, Empfangen des Token von der Tokenisierungseinrichtung, Ersetzen des unverschlüsselten Datenstrings in dem Datensatz durch den Token und Weiterleiten des Datensatzes mit dem Token über den Datenkanal.

Die Idee einer solchen Abfangeinrichtung ist es, den Eingabe-/Ausgabekanal einer weiteren Einrichtung zur Verarbeitung des Datensatzes zu überwachen und ohne Eingriff in die anderen Einrichtungen des Systems in allen Datensätzen, welche unverschlüsselte sicherheitsrelevante Datenstrings enthalten, diese durch Token zu ersetzten.

Die so von der Abfangeinrichtung modifizierten Datensätze, aus denen der sicherheitsrelevante Datenstring nicht mehr ableitbar ist, werden dann von der weiteren Einrichtung weiterverarbeitet, wobei für diese die Ersetzung des sicherheitsrelevanten unverschlüsselten Datenstrings durch den Token zu keinerlei Änderung bei der Verarbeitung führt, da der Token den unverschlüsselten Datenstring vorzugsweise formaterhaltend ersetzt.

Insbesondere wird der Datensatz mit dem Token in der weiteren Einrichtung gespeichert. In einem Server für ein bargeldloses Zahlungsverkehrssystem ist die weitere Einrichtung beispielsweise ein Transaktionsdatenspeicher.

Damit Datensätze, die von der weiteren Einrichtung zurück- bzw. ausgegeben werden, wieder mit dem unverschlüsselten Datenstring weiterverarbeitbar sind, führt die Abfangeinrichtung in einer Ausführungsform darüber hinaus die Schritte aus: Abfangen eines über den Datenkanal in einer zweiten Richtung, wobei diese vorzugsweise der ersten Richtung entgegengesetzt ist, Übertragen des Datensatzes, Identifizieren des Token in dem abgefangenen Datensatz, übergeben des Token an die Tokenisierungseinrichtung zum Wiederherstellen des unverschlüsselten Datenstrings, Empfangen des unverschlüsselten Datenstrings von der Tokenisierungseinrichtung, Ersetzen des Token in dem Datensatz durch den unverschlüsselten Datenstring und Weiterleiten des Datensatzes mit dem unverschlüsselten Datenstring über den Datenkanal.

In einer Ausführungsform der Erfindung umfasst das Identifizieren des unverschlüsselten Datenstrings oder des Token in einem Datensatz ein Bestimmen der Länge und der Position des unverschlüsselten Datenstrings oder des Token in dem Datensatz.

Dazu kann in einer Ausführungsform vorgesehen sein, dass der Datensatz ein Identifikationsfeld aufweist, das Informationen über die Position des zu ersetzenden unverschlüsselten Datenstrings in dem Datensatz enthält, wobei zum Bestimmen der Position des unverschlüsselten Datenstrings oder des Token in dem Datensatz das Identifikationsfeld ausgelesen wird.

Insbesondere, wenn der Datensatz kein solches Identifikationsfeld umfasst, ist es zweckmäßig, wenn der zu ersetzende unverschlüsselte Datenstring ein eindeutig identifizierbares Muster bzw. Struktur aufweist, wobei zum Bestimmen der Position des unverschlüsselten Datenstrings oder des Token in dem Datensatz ein Vergleich aller in dem Datensatz enthaltenen Strings mit einem gespeicherten eindeutig identifizierbaren Muster erfolgt. Es versteht sich, dass die zu ersetzenden Datenstrings auch eines aus einer Mehrzahl von Mustern aufweisen kann, wobei dann alle in dem Datensatz enthaltenen Strings mit einer Mehrzahl von gespeicherten eindeutig identifizierbaren Mustern verglichen wird.

In einer Ausführungsform der Erfindung wird, wenn der zu ersetzende unverschlüsselte Datenstring an einer Mehrzahl von Positionen in dem Datensatz auftritt, dieser an allen Stellen durch den Token ersetzt.

Eine Kombination aus Tokenisierungseinrichtung und Abfangeinrichtung ermöglicht es in einer Ausführungsform Ersetzungs- und Wiederherstellungsverfahren für jeden Datensatz zu protokollieren. Aus der Art, der Häufigkeit, insbesondere in Korrelation mit der Instanz, von welcher der Datensatz stammt oder von welcher er angefragt wird, lassen sich in einer weiteren Ausführungsform mögliche Angriffe, insbesondere auf die weitere Verarbeitungseinrichtung, erfassen.

In einer Ausführungsform der Erfindung ist die Größe des für den unverschlüsselten Datenstring verwendeten Alphabets gleich der Größe des Alphabets, aus welchem die Ersetzungszeichen bestehen.

Um eine ausreichende Sicherheit zu gewährleisten, ist es vorteilhaft, wenn die Anzahl der Wiederholung der Verfahrensschritte beim Erzeugen des Token und beim Wiederherstellen des unverschlüsselten Datenstrings mindestens n+1, vorzugsweise jedoch 2n, beträgt, wobei n die Länge des zu ersetzenden Datenstrings ist.

In einer Ausführungsform der Erfindung umfasst das Berechnen des Index der Ersetzungstabelle bei dem Erzeugen des Token oder dem Wiederherstellen des unverschlüsselten Datenstrings aus einem Token folgende Schritte, Berechnen eines Hash-Werts durch Anwenden einer Hash-Funktion auf eine Binäreingabe, die denjenigen Teilstring des Datenstrings, der mehr als ein Zeichen aufweist, umfasst, und Bestimmen der x signifikantesten Bits des Hash-Werts als Index für den zu verwendenden Ersetzungswert, wobei x die Anzahl von Bits ist, die benötigt werden, um alle Einträge der Ersetzungstabelle mit einem eindeutigen Index zu versehen. Bei einer Trunkierung auf x Bits kann die Ersetzungstabelle 2^{x} Einträge aufweisen, die alle mit einem eindeutigen, durch die x Bits darstellbaren Index versehen sind.

In einer Ausführungsform der Erfindung umfasst die Binäreingabe, auf welche der Hash-Wert angewandt wird, zusätzlich einen Binärstring (salt) der Länge s und/oder die Ordnung der Wiederholung. Dabei wird unter der Ordnung der Wiederholung die Anzahl der Widerholungen der Verfahrensschritte zum Ersetzen der einzelnen Zeichen des Datenstrings einschließlich der aktuellen Wiederholungsrunde verstanden.

In einer Ausführungsform der Erfindung umfasst der Binärstring (salt) einen nicht zu verschlüsselnden Teilstring des zu verschlüsselnden Datenstrings und/oder einen willkürlich gewählten String. Insbesondere kann der Binärstring (salt) aus einer Kombination von Strings zusammengesetzt sein, um die Sicherheit des Systems zu erhöhen.

Mit Hilfe eines solchen hier als salt bezeichneten Binärstrings, welcher für das Berechnen des Index für den zu verwendenden Ersetzungswert herangezogen werden kann, kann die Sicherheit des verwendeten Verfahrens erhöht werden. Wird als Binärstring ein willkürlich gewählter String verwendet, so kann dessen Wert entweder willkürlich von dem Administrator der Tokenisierungsengine festgelegt werden oder beispielsweise auch ein festgelegter Bestandteil des Codes für die Tokenisierungsengine sein. In einer Ausführungsform der Erfindung ist der Binärstring für das Berechnen des Index ein nicht zu verschlüsselnder Teilstring eines unverschlüsselten Datenstrings, beispielweise einer PAN.

In einer weiteren Ausführungsform der Erfindung wird das computerimplementierte Verfahren zum sicheren Speichern eines Datenstrings im Sinne der vorliegenden Anmeldung in einem Server für ein bargeldloses Zahlungsverkehrssystem ausgeführt.

In einer Ausführungsform sieht das Verfahren dabei vor, dass der Token nicht an andere Einrichtungen des Zahlungsverkehrssystems übertragen wird. Benötigen also andere Einrichtungen des Zahlungssystems als der Server den unverschlüsselten Datenstring, d.h. beispielsweise eine PAN, so wird mit Hilfe des erfindungsgemäßen Verfahrens aus dem Token zunächst der unverschlüsselte Datenstring wiederhergestellt und dieser dann übermittelt.

Es sind jedoch andere Ausführungsformen denkbar, bei denen auch die Token selbst an andere Einrichtungen des Zahlungsverkehrssystems übertragen werden können. Falls diese Einrichtungen dann zu einem späteren Zeitpunkt den unverschlüsselten Datenstring für bestimmte Verarbeitungsschritte benötigen, so erfolgt die Wiederherstellung des unverschlüsselten Datenstrings in der Tokenisierungsengine. Die anderen Einrichtungen des Systems übersenden den Token zur Wiederherstellung des unverschlüsselten Datenstrings an die Tokenisierungsengine oder erhalten einen anderweitigen Zugriff auf diese.

Die Wiederherstellung eines unverschlüsselten ursprünglichen Datenstrings aus dem Token, setzt jedoch voraus, dass der Token in irgendeiner Weise dem Datenstring zugeordnet werden kann.

Dabei wird in einer Ausführungsform des erfindungsgemäßen Verfahrens beim Erzeugen des Token das Ersetzungszeichen aus dem durch den Index bestimmten Eintrag der Ersetzungstabelle und dem zu ersetzenden Zeichen berechnet und beim Wiederherstellen des unverschlüsselten Datenstrings wird das Ersetzungszeichen aus dem durch den Index bestimmten Eintrag und dem zu ersetzenden Zeichen berechnet.

Bei einer derartigen Ausgestaltung des Verfahrens ist es zweckmäßig, wenn die Rechenoperationen zum Berechnen des Ersetzungszeichens beim Erzeugen des Token und beim Wiederherstellen des unverschlüsselten Datenstrings zueinander inverse mathematische Operationen, insbesondere Addition und Subtraktion oder Multiplikation und Division, sind.

Sollen nun beispielsweise die vollständigen Daten einer Transaktion einschließlich dem unverschlüsselten Datenstring an eine andere Einrichtung im System übertragen werden, so wird der zusammen mit der angegebenen Transaktionsnummer gespeicherte Token im Speicher identifiziert und sodann mit dem zuvor beschriebenen erfindungsgemäßen Verfahren aus dem Token der unverschlüsselte Datenstring wiederhergestellt.

Insoweit die oben beschriebenen Ausführungsformen zumindest teilweise realisiert werden können, wobei eine softwaregesteuerte Datenverarbeitungseinrichtung verwendet wird, ist es offensichtlich, dass ein Computerprogramm, das solch eine Softwaresteuerung bereitstellt und ein Speichermedium, auf welchem solch ein Computerprogramm gespeichert ist, als Aspekte der Erfindung in Betracht zu ziehen sind.

Weitere Vorteile, Merkmale und Anwendungsmöglichkeiten der vorliegenden Erfindung werden anhand der folgenden Beschreibung einer Ausführungsform und der dazugehörigen Figuren deutlich.
Figur 1 zeigt schematisch ein Zahlungsverkehrsabwicklungssystem mit einer erfindungsgemäßen sicheren Verarbeitung von PANs im zentralen Server.
Figur 2 zeigt anhand eines Flussdiagramms die Tokenisierung eines Datenstrings gemäß einer Ausführungsform des erfindungsgemäßen Verfahrens.
Figur 3 zeigt einen Schritt eines Flussdiagramms zum Wiederherstellen des unverschlüsselten Datenstrings gemäß einer Ausführungsform des erfindungsgemäßen Verfahrens.
Figur 4 erläutert schematisch die Erzeugung des Index der Ersetzungstabelle gemäß einer Ausführungsform des erfindungsgemäßen Verfahrens.

In den Figuren sind gleiche Elemente mit gleichen Bezugszeichen bezeichnet.

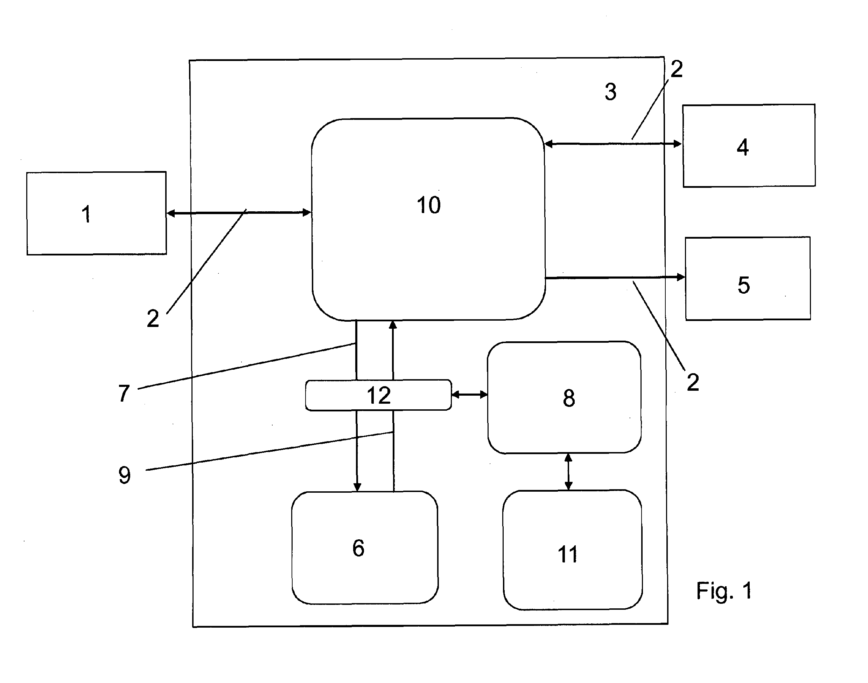

Figur 1 zeigt eine schematische Darstellung eines Zahlungsverkehrsabwicklungssystems, in welchem das erfindungsgemäße Verfahren zum sicheren Speichern eines Datenstrings zum Einsatz kommt.

Das gezeigte Zahlungsverkehrsabwicklungssystem besteht aus einer Mehrzahl von Kassensystemen 1, von denen eines in Figur 1 dargestellt ist. Über eine Netzwerkverbindung 2 ist das Kassensystem 1 mit einem zentralen Server 3 verbunden. Dieser wiederum ist über Netzwerkverbindungen 2 sowohl mit Kreditkartenanbietern 4 als auch mit dem oder den eigentlichen Zahlungsausgleichssystemen 5 verbunden.

Der Server wiederum weist in der gezeigten Ausführungsform eine zentrale Verarbeitungseinheit 10, eine Abfangeinrichtung 12, einen Transaktionsdatenspeicher 6, eine Tokenisierungseinrichtung 8 sowie einen Token-Tresor 11 auf.

Von den Kassensystemen 1 empfängt der Server 3 über die Netzwerkverbindung 2 Informationen über die zu tätigende Transaktion. Diese Informationen umfassen insbesondere die (Kredit-) Kartennummer des Käufers sowie Angaben zum Preis, dem Abwicklungszeitpunkt des Kaufs und Ähnlichem. Dabei liegen die Informationen über eine Transaktion in Form einer Nachricht vor, welche über die Netzwerkverbindungen 2 von und zu dem Server 3 übertragen wird. Eine solche Nachricht ist ein Datensatz im Sinne der vorliegenden Anmeldung. Die Informationen über die getätigte Transaktion können zum Einen von der zentralen Verarbeitungseinheit 10 auf dem Server 3 unmittelbar, d.h. ohne Zwischenspeicherung, an den Kreditkartengeber 4 oder das Zahlungsausgleichssystem 5 weitergeleitet werden. Dabei erfolgt die Weiterleitung aus Sicht des auf dem Server 3 implementierten Systems im Klartext, d.h. unverschlüsselt. Dies bedeutet jedoch nur, dass für diese Übermittlung der Server 3 selbst keine Verschlüsselung vornimmt. Vielmehr werden die Kanäle 2 von und zu dem Server 3 durch für diese proprietäre Systeme geschützt. Beispielsweise sind die Netzwerke 2 als VPN-Kanäle ausgestaltet.

Aufgabe der auf dem Server 3 implementierten zentralen Verarbeitungseinheit 10 ist es, aufgrund seiner hohen Verfügbarkeit die Transaktionsinformationen zu verarbeiten und gegebenenfalls solange zu speichern, bis auch die korrespondierenden Einrichtungen der Kreditkartengeber 4 und der Systeme 5 wieder verfügbar sind. Zudem erfolgt üblicherweise eine Speicherung der Transaktionsinformationen zur späteren Abwicklung von Reklamationen sowie zur kumulierten Weiterleitung an die Zahlungsausgleichssysteme (5).

Um eine größtmögliche Sicherheit der Transaktionsdaten bei der Handhabung im Server 3 zu gewährleisten, werden sämtliche in den Transaktionsdaten enthaltenen PANs, welche hier die unverschlüsselten Datenstrings im Sinne der vorliegenden Anmeldung bilden, vor der Speicherung der Daten in dem Transaktionsdatenspeicher 6 durch Token ersetzt. Dazu wird der Eingangspfad 7 in den Transaktionsdatenspeicher 6 ebenso wie der Ausgangsdatenpfad 9 aus dem Transaktionsdatenspeicher 6 von der Abfangeinrichtung 12 (diese ist eine Verarbeitungseinrichtung im Sinne der vorliegenden Anmeldung) überwacht. Der Transaktionsdatenspeicher 6 bildet eine weitere Einrichtung zum Verarbeiten des Datensatzes im Sinne der vorliegenden Anmeldung.

Alle zu speichernden Datensätze auf dem Eingangsdatenpfad 7, welche eine PAN, d.h. einen sicherheitsrelevanten unverschlüsselten Datenstring, enthalten, werden von der Abfangeinrichtung 12 abgefangen. Der Datensatz wird analysiert und der darin enthaltene unverschlüssselte Datenstring wird an die Tokenisierungseinrichtung 8 (auch als Tokenisierungs-Engine bezeichnet) übergeben. Von der Tokenisierungseinrichtung 8 wird der unverschlüsselte Datenstring empfangen und durch einen Token ersetzt. Der Token wird dann wieder an die Abfangeinrichtung übergeben. Die Abfangeinrichtung ersetzt danach in dem abgefangenen Datensatz den unverschlüsselten Datenstring durch den Token und gibt den so veränderten sicheren Datensatz an den Transaktionsdatenspeicher 6 zum Speichern des Datensatzes aus.

Soll umgekehrt ein Datensatz aus dem Transaktionsdatenspeicher 6 ausgelesen und an die zentrale Verarbeitungseinheit 10 bereitgestellt werden, so muss zunächst der Token des in dem Transaktionsdatenspeicher gespeicherten Datensatzes wieder durch den unverschlüsselten Datenstring ersetzt werden.

Dazu werden alle aus dem Transaktionsdatenspeicher ausgelesenen Datensätze auf dem Ausgangsdatenpfad 9 von der Abfangeinrichtung 12 abgefangen. Der Datensatz wird analysiert und der darin enthaltene Token wird an die Tokenisierungseinrichtung 8 übergeben. Von der Tokenisierungseinrichtung 8 wird der Token empfangen und wieder durch den zugehörigen unverschlüsselten Datenstring ersetzt. Der unverschlüsselte Datenstring wird dann wieder an die Abfangeinrichtung 12 übergeben. Die Abfangeinrichtung 12 ersetzt danach in dem aus dem Transaktionsdatenspeicher 6 ausgelesenen und abgefangenen Datensatz den Token durch den unverschlüsselten Datenstring und gibt den so veränderten Datensatz an die zentrale Verarbeitungseinheit 10 zur Weiterverarebitung des Datensatzes aus. Eine solche Weiterverarbeitung umfasst insbesondere ein Routen einer Nachricht mit dem Datensatz an einen Kartenanbieter 4 oder ein Zahlungsausgleichsystem 5.

Als vorteilhaft bei dieser Architektur erweist es sich, dass in dem Transaktionsdatenspeicher 6 die PANs zu den einzelnen Transaktionen nicht im Klartext vorliegen, sondern durch Token, d.h. zufällig ermittelte Synonyme, ersetzt sind. Ein Angriff auf den Transaktionsdatenspeicher 6 liefert also niemals die Informationen über die PANs, sodass ein solcher Angriff wirkungslos bleibt. Um eine größtmögliche Sicherheit zu gewährleisten, sind die eigentliche Tokenisierungseinrichtung 8 und die erfindungsgemäße Kombination aus Indexfunktion und Ersetzungstabelle, die in dem sogenannten Token-Tresor 11 verwahrt werden, getrennt voneinander implementiert.

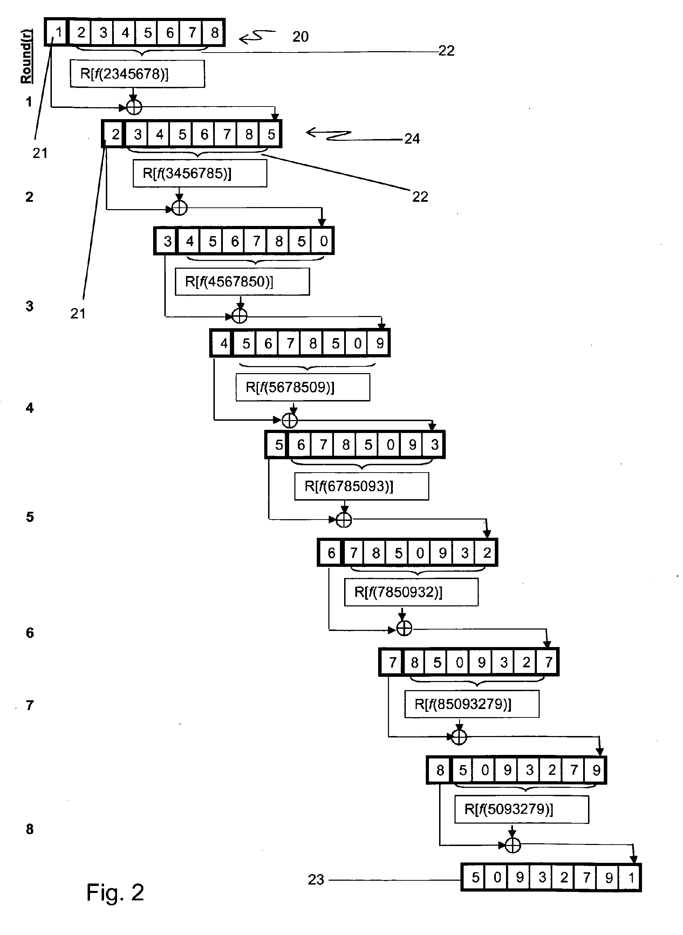

Nachfolgend wird anhand der Figuren 2 bis 4 erläutert, wie für einen eine Transaktion beschreibenden Datensatz das Ersetzen der PAN als sicherheitsrelevantem, unverschlüsselten Datenstring durch die Engine 8 erfolgt. Es wird zudem auch beschrieben, wie der Token durch den ihm zugeordneten sicherheitsrelevanten, unverschlüsselten Datenstring übersetzt wird, wenn der Datensatz aus dem Server 3 ausgegeben werden soll.

Das Flussdiagramm aus Figur 2 zeigt schematisch anhand eines Beispiels, wie ein unverschlüsselter Datenstring 20, hier eine Kreditkartennummer, mit der exemplarischen Zeichenfolge "12345678" durch einen Token mit der Zeichenfolge "50932791" ersetzt wird. Dieses Ersetzen der PAN durch den Token erfolgt in der in Figur mit 8 gezeigten Engine zur Tokenisierung.

Um alle Zeichen der ursprünglichen PAN als zu verschlüsselndem Datenstring zu ersetzen, muss dieser Prozess achtmal durchlaufen werden, wobei die Ordnungszahl für die entsprechende Runde des Verfahrens in Figur 2 links neben dem Flussdiagramm zu sehen ist. Allerdings ist es unschädlich, wenn das Verfahren noch weitere Male durchlaufen wird, um die Sicherheit bei der Ersetzung der Datenstrings durch den Token zu erhöhen.

Zunächst wird der unverschlüsselte Datenstring 20 mit der genannten Zeichenfolge in zwei Teilstrings 21, 22 zerlegt, wobei der erste Teilstring nur das erste Zeichen "1" des zu verschlüsselnden Datenstrings enthält, während der zweite Teilstring alle weiteren Zeichen des zu verschlüsselnden Datenstrings enthält, nämlich "2345678". Nun gilt es, das einzige Zeichen "1" im ersten Teilstring durch ein zufällig gewähltes Zeichen aus einem Alphabet, mit welchem die Token aufgebaut werden, zu ersetzen.

Dabei hat in der dargestellten Ausführungsform der Zeichensatz, d.h. das Alphabet, aus dem die PAN als unverschlüsseltem Datenstring aufgebaut ist und das Alphabet oder der Zeichensatz, aus dem die Token aufgebaut sind, die gleiche Anzahl von Zeichen.

Formaterhaltend hat auch der Token die gleiche Anzahl von Zeichen wie die diesem Token zugeordnete PAN.

In dem Beispiel aus Figur 2 muss in der ersten Runde das Zeichen "1" aus dem Teilstring mit nur einem Zeichen ersetzt werden. Das Zeichen des Token, durch welches das einzige Zeichen des ersten Teilstrings ersetzt wird, ist in einer Tabelle enthalten, welche in der dargestellten Ausführungsform mindestens acht zufällig ausgewählte Ersetzungszeichen enthält, die in acht jeweils mit einem Index versehenen Einträgen in der Ersetzungstabelle abgelegt sind.

Um zu bestimmen, mit welchem Zeichen der Ersetzungstabelle das im ersten Teilstring enthaltene Zeichen ersetzt werden soll, wird eine Funktion auf den zweiten Teilstring angewendet, welche dazu dient, den Index desjenigen Eintrags der Ersetzungstabelle zu bestimmen, dessen Ersetzungszeichen zum Ersetzen des einzigen Zeichens des ersten Teilstrings verwendet wird.

In dem in Figur 2 dargestellten Flussdiagramm zur Veranschaulichung der eigentlichen Tokenbildung bezeichnet R[x] den Eintrag einer Ersetzungstabelle R mit dem Index x, wobei der Index x ausgerechnet wird mit Hilfe einer Funktion f, angewandt auf die Zeichen des zweiten Teilstrings, hier "2345678".

Im gewählten Beispiel wird das Zeichen "1" des ersten Teilstrings in Runde 1, d.h. der ersten Wiederholung des Ersetzungsverfahrens mit dem Zeichen "5", d.h. demjenigen Eintrag der Ersetzungstabelle, der den Index x=f (2345678) hat, ersetzt.

Das Ersetzungszeichen bildet dann das letzte Zeichen des in der nächsten Runde des Verfahrens zu verarbeitenden Strings 24. Dieser String 24 wird in der zweiten Runde erneut in zwei Teilstrings 21, 22 zerlegt. Von diesen Teilstrings enthält der erste 21 wieder nur ein Zeichen, nämlich das zweite Zeichen "2" des ursprünglichen unverschlüsselten Strings 20 und der zweite 22 enthält die restlichen Zeichen "345678" des ursprünglichen Strings 20 sowie als letztes Zeichen das Ersetzungszeichen "5" aus der ersten Runde.

Dieses Vorgehen wird in dem gezeigten Beispiel aus Figur 2 so oft wiederholt, bis alle Zeichen des ursprünglichen unverschlüsselten Datenstrings durch zufällige Ersetzungszeichen aus der Ersetzungstabelle ersetzt sind. Da der ursprüngliche Datenstring 20 im gezeigten Beispiel eine Länge von acht Zeichen aufweist, sind nach acht Durchgängen sämtliche Zeichen ersetzt und der vollständige Token 23 gebildet. Um die Sicherheit weiter zu erhöhen, sollte das Verfahren zumindst für eine weitere Runde fortgesetzt werden fortgesetzt werden. Dabei ist in der dargestellten Ausführungsform tatsächlich die Anzahl der Durchläufe r doppelt so groß wie die Länge n des ursprünglichen unverschlüsselten Datenstrings.

Im Gesamtsystem, so wie es in Figur 1 gezeigt ist, würde nun der Token 23 aus Figur 2 den ursprünglichen Datenstring, d.h. die PAN 20, ersetzen und der Datensatz würde von der Tokenisierungsengine 8 zur Verarbeitung 6 weitergereicht, wo er dann nicht mehr der PAN zuordenbar ist. Auch in der Engine 8 bzw. dem Token-Tresor 11 ist an keiner Stelle eine direkte Zuordnung zwischen Token und PAN gespeichert. Vielmehr sind im Token-Tresor 11 lediglich die Ersetzungstabelle mit ihren darin enthaltenen Ersetzungswerten sowie die Funktion f zur Indexberechnung bei der Ersetzung abgespeichert.

Erst wenn ein Datensatz vom Server 3 wieder an eine der anderen Komponenten 1, 4, 5 des Systems übergeben werden soll, wird der ein Pseudonym für die PAN im Datensatz darstellende Token wieder durch die PAN im Klartext ersetzt. Dazu werden die für die Ersetzung der PAN durch den Token beschriebenen Schritte in umgekehrter Reihenfolge durchlaufen.

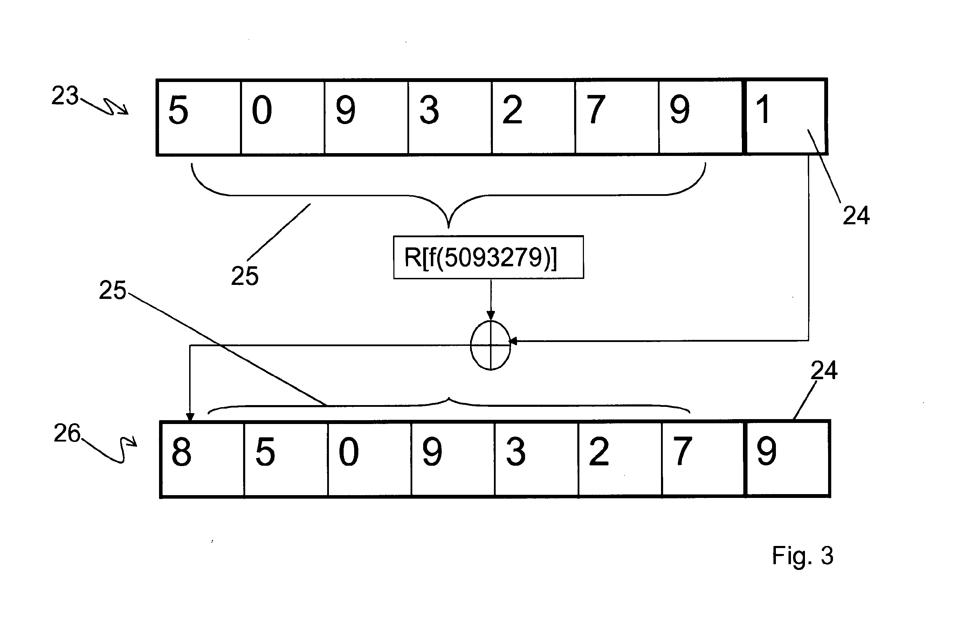

Beispielhaft ist in Figur 3 dazu die erste Runde dargestellt. Der Token 23 wird zunächst in zwei Teilstrings 25, 24 aufgeteilt, nämlich einen ersten Teilstring 25, der alle bis auf das letzte Zeichen des Token enthält und einen zweiten Teilstring 24, welcher als einziges Zeichen das letzte Zeichen des Token, hier das Zeichen "1", enthält. Nun wird das einzige Zeichen des zweiten Teilstrings 24 durch das zum Index des letzten Ersetzungszeichens gehörende Zeichen des ursprünglichen Datenstrings ersetzt.

Zum Erzeugen des entsprechenden Index wird die Indexfunktion f auf die Zeichen des ersten Teilstrings 25 angewandt. In dem dargestellten Beispiel bedeutet dies, dass das Zeichen "1" des zweiten Teilstrings 24 des Token 23 durch das Zeichen "8" der ursprünglichen PAN ersetzt wird. Dieses ursprüngliche Zeichen "8" bildet dann das erste Zeichen des in der nächsten, d.h. zweiten, Runde zu verarbeitenden Strings 26. Dieser weiterzuverarbeitende String 26 wird erneut in einen ersten Teilstring 25 und einen zweiten Teilstring 24 zerlegt, wobei letzterer nur ein einziges, nämlich das letzte Zeichen des weiterzuverarbeitenden Strings 26 aufweist.

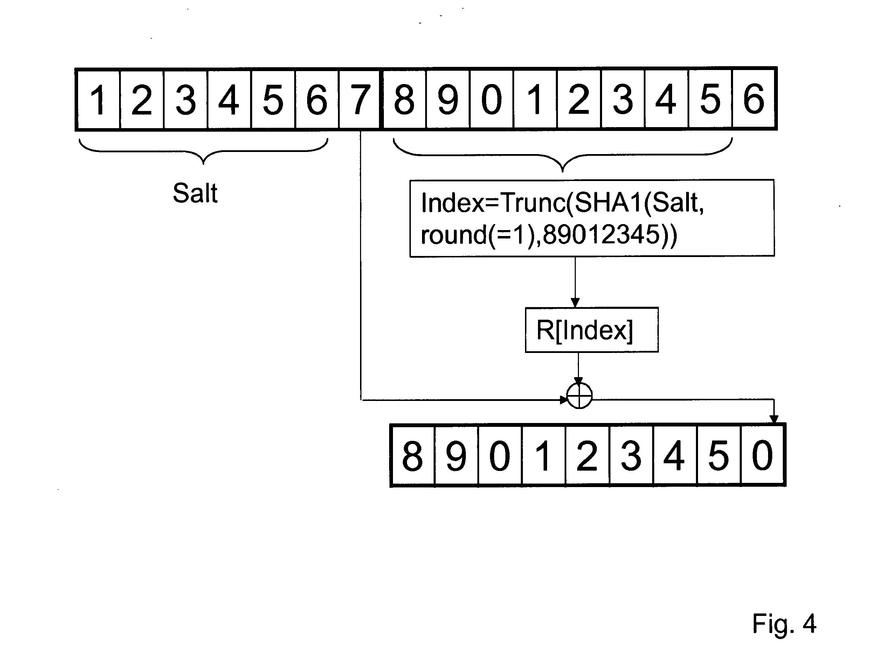

Figur 4 zeigt beispielhaft, wie mit der Anwendung einer Funktion auf denjenigen Teilstring des zu ersetzenden Strings (unabhängig von der Frage, ob man sich den Prozess der Tokenisierung oder der Wiederherstellung des ursprünglichen Datenstrings aus dem Token betrachtet), welcher mehr als ein Zeichen enthält, der Index eines Ersetzungszeichens aus der Ersetzungstabelle bestimmt werden kann.

In der dargestellten Ausführungsform wird eine Hash-Funktion auf einen String angewendet, der sich aus einem sogenannten salt, dem Rundenindex round, im vorliegenden Fall der Runde 1, und den Zeichen desjenigen Teilstrings, der mehr als ein Zeichen enthält, zusammensetzt. Im gewählten Beispiel ist die Hash-Funktion der SHA-1-Algorithmus. Der so erzeugte Hash-Wert wird auf die x signifikantesten Bits trunkiert, wobei x die Anzahl von Bits bezeichnet, die notwendig ist, um alle Einträge der Ersetzungstabelle zu indizieren. So wird vermieden, dass mit der Hash-Funktion Indices berechnet werden, die es in der tatsächlich gespeicherten Ersetzungstabelle nicht gibt. Bei einer Trunkierung auf x Bits kann die Tabelle 2^{x} Einträge aufweisen, die alle mit einem eindeutigen Index versehen werden können.

Mit dem so berechneten Index wird dann dasjenige Zeichen bestimmt, welches im gezeigten Beispiel das einzige Zeichen des ersten Teilstrings ersetzt.

Um eine mathematische Handhabbarkeit des hier beschriebenen Verfahrens zu gewährleisten, wird in Ausführungsformen zunächst der unverschlüsselte Datenstring 20 in eine interne Darstellung der Tokenisierungsengine umgesetzt. Wenn *p*[0] ... *p*[*n*-1] die einzelnen Zeichen des unverschlüsselten Datenstrings mit ihrer Position innerhalb des Strings bezeichnen, so ist die interne Darstellung dieses Strings *pᵢₙₜ*[0] ... *pᵢₙₜ*[*n*-1], wobei *pᵢₙₜ*[0] die ganzzahlige Position des Zeichens *p*[0] innerhalb des Alphabets *A*, aus welchem der unverschlüsselte Datenstring aufgebaut ist, bezeichnet, usw.

In diesem Fall müssten die folgenden Schritte *r*-mal wiederholt werden, wobei ***i*** die Zahl der aktuellen Runde beschreibt (beginnend mit 1):
1. Berechne den Hash-Wert *h* mit dem SAH-1-Hash-Algorithmus, welcher als Eingabe einen Binärstring verwendet, der aus der Verknüpfung des salt, der Zahl der Runde *i* und dem String *pᵢₙₜ*[1]... *pᵢₙₜ*[*n*-1] gebildet ist.
2. Nehme *k* als die signifikantesten 24 Bits von *h.*
3. Definiere *temp* als (*pᵢₙₜ*[0] + *R*[*k*]) mod *a*, wobei *R*[*k*] der Eintrag der Ersetzungstabelle *R* mit dem Index *k* und *a* die Größe der Alphabete der unverschlüsselten Datenstrings und der Token ist.
4. Bilde *pint*[*j*]*=pᵢₙₜ[j+*1] für 0 ≤ *j* ≤ *n*-2 und *pᵢₙₜ*[*n*-1]=*temp.*
5. Erhöhe *i* um 1.

Nach dem r-maligen Wiederholen der Schritte 1 bis 5 wird der String *t*[0] ... *t*[n-1] als die externe Darstellung von pᵢₙₜ[0] ... pᵢₙₜ[*n*-1] ausgegeben, wobei *t*[0] = *A*[*pint*[0]] ist, usw.

Das umgekehrte Verfahren, das den ursprünglichen unverschlüsselten Datenstring 20 aus dem Token 23 erzeugt, arbeitet dann wie folgt:
Anwenden der nachfolgend dargestellten Schritte *r*-mal auf die interne Darstellung t*ᵢₙₜ* [0] ... *tᵢₙₜ*[*n-*1] des Token *t*[0] ... *t*[*n*-1], wobei *i* die Anzahl der derzeitigen Runde (beginnend von *r*) bezeichnet:
   1. Berechne den Hash-Wert *h* mit dem SAH-1-Hash-Algorithmus, welcher als Eingabe einen Binärstring verwendet, der aus der Verknüpfung des salt, der Zahl der Runde *i* und dem String t*ᵢₙₜ*[1] ... *tᵢₙₜ*[*n*-1] gebildet ist.
   2. Man nehme *k* als die signifikantesten 24 Bits von *h.*
   3. Definiere *temp* als *tᵢₙₜ*[*n-*1]*- R*[*k*]*,* wobei *R*[*k*] der Eintrag der Ersetzungstabelle R mit dem Index *k* ist.
   4. Falls *temp*>0 dann bilde *temp = temp + a*, wobei *a* die Größe der Alphabete der unverschlüsselten Datenstrings und der Token ist.
   5. Bilde *tᵢₙₜ*[*j*]*=pᵢₙₜ*[j*-1*] für 1 ≤ *j* ≤ *n-1* und *tᵢₙₜ*[0]=*temp.*
   6. Erhöhe *i* um 1.

Nach *r*-maligem Wiederholen der Schritte 1. bis 6. wird der String *p*[0] ... *p*[*n*-1] als die externe Darstellung von *tᵢₙₜ*[0]*... tᵢₙₜ*[*n*-1] ausgegeben, wobei *p*[0] = *A*[*tᵢₙₜ*[0]] ist, usw.

Die in diesem Beispiel benutzte Operation zum Berechnen des neuen Zeichens in den Schritten 3. aus dem zu ersetzenden Zeichen und den Ersetzungszeichen aus der Ersetzungstabelle vermeidet die Notwendigkeit, beim Erzeugen der Token in die Ersetzungstabelle die ersetzten Zeichen hineinzuschreiben, was wiederum die Sicherheit erhöht, da an keiner Stelle, d.h. auch nicht im Token-Tresor eine Zuordnung zwischen den Zeichen des ursprünglichen Datenstrings und den Zeichen des Token möglich ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Kassensystem
- 2: Netzwerkverbindung
- 3: Server
- 4: Kreditkartenanbieter
- 5: Zahlungsausgleichssysteme
- 6: Transaktionsdatenspeicher
- 7: Eingangspfad
- 8: Tokenisierungseinrichtung
- 9: Datenausgangspfad
- 10: zentrale Verarbeitungseinheit des Servers
- 11: Token-Tresor
- 12: Abfangeinrichtung
- 20: unverschlüsselter Datenstring
- 21: erster Teilstring
- 22: zweiter Teilstring
- 23: Token
- 24: String als Zwischenstufe
- 23: Token
- 24: zweiter Teilstring
- 25: erster Teilstring
- 26: String als Zwischenstufe

## Patentansprüche

1. Computerimplementiertes Verfahren zum Ersetzen eines sicherheitsrelevanten, unverschlüsselten Datenstrings aus einem Datensatz durch einen Token in einer Tokenisierungseinrichtung mit den Schritten
Empfangen des sicherheitsrelevanten, unverschlüsselten Datenstrings von einer Verarbeitungseinrichtung
Erzeugen eines dem unverschlüsselten Datenstring zugeordneten Token (23) mit den Schritten
Bereitstellen einer Ersetzungstabelle mit zufälligen Einträgen, wobei jedem Eintrag ein Index der Ersetzungstabelle zugeordnet ist,
Aufteilen des unverschlüsselten Datenstrings in zwei Teilstrings, wobei der erste Teilstring (25) nur aus dem ersten Zeichen des unverschlüsselten String besteht und der zweite Teilstring (24) aus den restlichen Zeichen des unverschlüsselten String besteht,
Berechnen eines Index der Ersetzungstabelle aus dem zweiten Teilstring (24), so dass ein Eintrag der Ersetzungstabelle bestimmt wird,
Erzeugen eines Ersetzungszeichens aus dem von dem Index bestimmten Eintrag, Ersetzen des einzigen Zeichens des ersten Teilstrings (25) durch das Ersetzungszeichen,
Vertauschen des ersten (25) und des zweiten (24) Teilstrings, so dass das ersetzte Zeichen des ersten Teilstrings (25) das letzte Zeichen oder das erste Zeichen des zweiten Teilstrings (24) wird und das erste Zeichen oder das letzte Zeichen des zweiten Teilstrings (24) das einzige Zeichen des ersten Teilstrings (25) wird, und
Wiederholen der vorstehenden Schritte, sodass ein dem unverschlüsselten Datenstring zugeordneter Token (23) erzeugt wird,
Übergeben des Token an die Verarbeitungseinrichtung,
Empfangen des Token von der Verarbeitungseinrichtung,
Wiederherstellen des unverschlüsselten Datenstring aus dem Token (23), der dem unverschlüsselten Datenstring zugeordnet ist, mit den Schritten
Bereitstellen der Ersetzungstabelle,
Aufteilen des Token (23) in zwei Teilstrings, wobei der erste Teilstring (25) aus allen Zeichen außer dem letzten Zeichen des Token (23) besteht und der zweite Teilstring (24) nur aus dem letzten Zeichen des Token (23) besteht,
Berechnen eines Index der Ersetzungstabelle aus dem ersten Teilstring (25), sodass ein bestimmter Eintrag der Ersetzungstabelle bestimmt wird,
Erzeugen eines Ersetzungszeichens aus dem von dem Index bestimmten Eintrag der Ersetzungstabelle, so dass das einzige Zeichen des zweiten Teilstrings (24) durch das Ersetzungszeichen ersetzt wird,
Vertauschen des ersten (25) und des zweiten (24) Teilstrings, so dass das einzige Zeichen des zweiten Teilstrings (24) das erste Zeichen oder das letzte Zeichen des ersten Teilstrings (25) wird und das letzte Zeichen oder das erste Zeichen des ersten Teilstrings (25) das einzige Zeichen des zweiten Teilstrings (24) wird, und Wiederholen der vorstehenden Schritte, sodass der dem Token (23) zugeordnete unverschlüsselten Datenstring wiederhergestellt wird,
Übergeben des unverschlüsselten Datenstrings an die Verarbeitungseinrichtung.

2. Verfahren nach Anspruch 1, **dadurch gekennzeichnet, dass** die Verarbeitungseinrichtung eine Abfangeinrichtung auf einem Datenkanal ist, welche die Schritte ausführt Abfangen eines über den Datenkanal in einer ersten Richtung übertragenen Datensatzes, Identifizieren des sicherheitsrelevanten, unverschlüsselten Datenstrings in dem abgefangenen Datensatz,
Übergeben des sicherheitsrelevanten, unverschlüsselten Datenstrings an die Tokenisierungseinrichtung zum Erzeugen eines Token,
Empfangen des Token von der Tokenisierungseinrichtung,
Ersetzen des unverschlüsselten Datenstrings in dem Datensatz durch den Token und Weiterleiten des Datensatzes mit dem Token über den Datenkanal.

3. Verfahren nach Anspruch 2, **dadurch gekennzeichnet, dass** der Datensatz von der Abfangeinrichtung an eine weitere Einrichtung zur Verarbeitung des Datensatzes, insbesondere eine Speichereinrichtung, weitergeleitet wird.

4. Verfahren nach Anspruch 2 oder 3, **dadurch gekennzeichnet, dass** die Abfangeinrichtung die Schritte ausführt
Abfangen eines über den Datenkanal in einer zweiten Richtung übertragenen Datensatzes,
Identifizieren des Token in dem abgefangenen Datensatz,
Übergeben des Token an die Tokenisierungseinrichtung zum Wiederherstellen des unverschlüsselten Datenstrings,
Empfangen des unverschlüsselten Datenstrings von der Tokenisierungseinrichtung, Ersetzen des Token in dem Datensatz durch den unverschlüsselten Datenstring und Weiterleiten des Datensatzes mit dem unverschlüsselten Datenstring über den Datenkanal.

5. Verfahren nach Anspruch 2 oder 4, **dadurch gekennzeichnet, dass** das Identifizieren des unverschlüsselten Datenstrings oder des Token in dem Datensatz ein Bestimmen der Länge und Position des unverschlüsselten Datenstrings oder des Token umfasst.

6. Verfahren nach einem der vorhergehenden Ansprüche, **dadurch gekennzeichnet, dass** die Anzahl der Wiederholung der Verfahrensschritte beim Erzeugen des Token und beim Wiederherstellen des unverschlüsselten Datenstrings mindestens n+1, vorzugsweise jedoch 2n, beträgt, wobei n die Länge des zu ersetzenden Datenstrings ist.

7. Computerimplementiertes Verfahren nach einem der vorhergehenden Ansprüche, **dadurch gekennzeichnet, dass** das Berechnen des Index der Ersetzungstabelle während des Erzeugens des Token (23) oder des Wiederherstellens des unverschlüsselten Datenstrings folgende Schritte umfasst,
Berechnen eines Hash-Werts (h) durch Anwenden einer Hash-Funktion auf eine Binäreingabe, die denjenigen Teilstring des Datenstring, der mehr als ein Zeichen aufweist, umfasst und
Bestimmen der x signifikantesten Bits des Hash-Werts als Index für den zu verwendenden Ersetzungszeichen, wobei x die Anzahl von Bits ist, die benötigt werden, um alle Einträge der Ersetzungstabelle mit einem eindeutigen Index zu versehen.

8. Computerimplementiertes Verfahren nach einem der vorhergehenden Ansprüche, **dadurch gekennzeichnet, dass** bei Erzeugen des Token (23) das Ersetzungszeichen aus dem durch den Index bestimmten Eintrag und dem zu ersetzenden Zeichen berechnet wird.

9. Computerimplementiertes Verfahren nach einem der vorhergehenden Ansprüche, **dadurch gekennzeichnet, dass** beim Wiederherstellen unverschlüsselten Datenstrings (20) das Ersetzungszeichen aus dem durch den Index bestimmten Eintrag und dem zu ersetzenden Zeichen berechnet wird.

10. Computerimplementiertes Verfahren nach einem der vorhergehenden Ansprüche, soweit von Ansprüche 8 und 9 abhängig, **dadurch gekennzeichnet, dass** die Rechenoperationen zum Berechnen des Ersetzungszeichens beim Erzeugen des Token (23) und beim Wiederherstellen des unverschlüsselten Datenstrings (20) zueinander inverse mathematische Operationen sind.

11. Computerimplementiertes Verfahren nach einem der vorhergehenden Ansprüche, **dadurch gekennzeichnet, dass** der zu verschlüsselnde Datenstring zumindest ein Teil einer Kontonummer oder einer Kartennummer ist.

12. Computerimplementiertes Verfahren nach einem der vorhergehenden Ansprüche, **dadurch gekennzeichnet, dass** das Verfahren in einem Server für ein bargeldloses Zahlungsverkehrssystem ausgeführt wird.

13. Computerprogramm mit Programmcode zur Durchführung eines Verfahrens nach einem der vorhergehenden Ansprüche.

14. Maschinenlesbarer Datenträger mit einem darauf gespeicherten Computerprogramm nach Anspruch 13.

15. Datenverarbeitungsvorrichtung, auf die ein Computerprogramm nach Anspruch 13.geladen ist.

## Claims

1. Computer-implemented method for replacing a security-relevant unencrypted data string from a data record by a token in a tokenisation device with the steps Reception of the security-relevant unencrypted data string from a processing device Generation of a token (23) assigned to the unencrypted data string with the steps
Provision of a replacement table with random entries, each entry being assigned an index of the replacement table,
Division of the unencrypted data string into two part strings, the first part string (25) consisting solely of the first character of the unencrypted string and the second part string (24) consisting of the remaining characters of the unencrypted string, Calculation of an index of the replacement table from the second part string (24) so that an entry of the replacement table is determined,
Generation of a replacement character from the entry determined by the index, Replacement of the single character of the first part string (25) by the replacement character,
Interchanging of the first part string (25) and the second part string (24) so that the replaced character of the first part string (25) becomes the last character or the first character of the second part string (24) and the first character or the last character of the second part string (24) becomes the single character of the first part string (25), and
Repetition of the preceding steps so that a token (23) assigned to the unencrypted data string is generated,
Transmission of the token to the processing device,
Reception of the token from the processing device,
Reconstitution of the unencrypted data string from the token (23) which is assigned to the unencrypted data string, with the steps
Provision of the replacement table,
Division of the token (23) into two part strings, the first part string (25) consisting of all the characters except the last character of the token (23) and the second part string (24) consisting solely of the last character of the token (23),
Calculation of an index of the replacement table from the first part string (25) so that a particular entry of the replacement table is determined,
Generation of a replacement character from the entry of the replacement table determined by the index so that the single character of the second part string (24) is replaced by the replacement character,
Interchanging of the first part string (25) and the second part string (24) so that the single character of the second part string (24) becomes the first character or the last character of the first part string (25) and the last character or the first character of the first part string (25) becomes the single character of the second part string (24), and Repetition of the preceding steps so that the unencrypted data string assigned to the token (23) is reconstituted,
Transmission of the unencrypted data string to the processing device.

2. Method according to claim 1, **characterised in that** the processing device is a capture device on a data channel which executes the steps
Capture of a data record transmitted over the data channel in a first direction,
Identification of the security-relevant unencrypted data string in the captured data record, Transmission of the security-relevant unencrypted data string to the tokenisation device for generation of a token,
Reception of the token from the tokenisation device,
Replacement of the unencrypted data string in the data record by the token and
Onward transmission of the data record with the token over the data channel.

3. Method according to claim 2, **characterised in that** the data record is passed on by the capture device to a further device for processing the data record, in particular a storage device.

4. Method according to claim 2 or 3, **characterised in that** the capture device executes the steps
Capture of a data record transmitted over the data channel in a second direction, Identification of the token in the captured data record,
Transmission of the token to the tokenisation device for reconstitution of the unencrypted data string,
Reception of the unencrypted data string from the tokenisation device,
Replacement of the token in the data record by the unencrypted data string and
Onward transmission of the data record with the unencrypted data string over the data channel.

5. Method according to claim 2 or 4, **characterised in that** the identification of the unencrypted data string or the token in the data record comprises determination of the length and position of the unencrypted data string or the token.

6. Method according to one of the preceding claims, **characterised in that** the number of the repetition of the process steps when generating the token and when reconstituting the unencrypted data string is at least n+1, but preferably 2n, n being the length of the data string to be replaced.

7. Computer-implemented method according to one of the preceding claims, **characterised in that** the calculation of the index of the replacement table during the generation of the token (23) or the reconstitution of the unencrypted data string comprises the following steps Calculation of a hash value (h) by applying a hash function to a binary input which comprises the part string of the data string containing more than one character and
Determination of the x most significant bits of the hash value as an index for the replacement character to be used, x being the number of bits required to provide all the entries of the replacement table with a unique index.

8. Computer-implemented method according to one of the preceding claims, **characterised in that** when generating the token (23) the replacement character is calculated from the entry determined by the index and the character to be replaced.

9. Computer-implemented method according to one of the preceding claims, **characterised in that** when reconstituting the unencrypted data string (20) the replacement character is calculated from the entry determined by the index and the character to be replaced.

10. Computer-implemented method according to one of the preceding claims, when dependent on claims 8 and 9, **characterised in that** the computing operations for calculating the replacement character when generating the token (23) and when reconstituting the unencrypted data string (20) are mutually inverse mathematical operations.

11. Computer-implemented method according to one of the preceding claims, **characterised in that** the data string to be encrypted is at least a part of an account number or of a card number.

12. Computer-implemented method according to one of the preceding claims, **characterised in that** the method is carried out in a server for a cashless payments system.

13. Computer programme with programme code for implementing a method according to one of the preceding claims.

14. Machine-readable data medium with a computer programme according to claim 13 stored thereon.

15. Data processing device onto which a computer programme according to claim 13 is loaded.

## Revendications

1. Procédé implémenté par ordinateur pour la substitution d'une chaîne non cryptée de données importante pour la sureté, provenant d'un ensemble de données, par un jeton dans un dispositif de jetonisation avec les étapes suivantes :
réception de la chaîne non cryptée de données importante pour la sûreté par un dispositif de traitement
génération d'un jeton (23) assigné à la chaîne non cryptée de données avec les étapes suivantes :
création d'une table de substitution avec des entrées aléatoires, un index de la table de substitution étant assigné à chaque entrée,
division de la chaîne non cryptée de données en deux chaînes partielles, la première chaîne partielle (25) étant constituée uniquement du premier caractère de la chaîne non cryptée et la deuxième chaîne (24) étant constituée des caractères restants de la chaîne non cryptée,
calcul d'un index de la table de substitution à partir de la deuxième chaîne partielle (24),
de façon à ce qu'une entrée de la table de substitution soit déterminée,
création d'un caractère de substitution à partir de l'entrée déterminée par l'index,
substitution de l'unique caractère de la première chaîne partielle (25) par le caractère de substitution,
échange de la première (25) et de la deuxième (24) chaîne partielle, de façon à ce que le caractère substitué de la première chaîne partielle (25) devienne le dernier caractère ou
le premier caractère de la deuxième chaîne partielle (24) et le premier caractère ou le dernier caractère de la deuxième chaîne partielle (24) devienne l'unique caractère de la première chaîne partielle (25) et
répétition des étapes précédentes de façon à ce qu'un jeton (23) assigné à la chaîne non cryptée de données soit créé,
transmission du jeton au dispositif de traitement,
réception du jeton par le dispositif de traitement,
restauration de la chaîne non cryptée de données à partir du jeton (23) assigné à la chaîne non cryptée de données, avec les étapes suivantes :
création de la table de substitution,
division du jeton (23) en deux chaînes partielles, la première chaîne partielle (25) étant constituée de tous les caractères excepté le dernier caractère du jeton (23) et la deuxième chaîne partielle (24) étant constituée uniquement du dernier caractère du jeton (23),
calcul d'un index de la table de substitution à partir de la première chaîne partielle (25),
de façon à ce qu'une entrée déterminée de la table de substitution soit déterminée,
création d'un caractère de substitution à partir de l'entrée, déterminée à partir de l'index,
de la table de substitution, de façon à ce que l'unique caractère de la deuxième chaîne partielle (24) soit remplacé par le caractère de substitution,
échange de la première (25) et de la deuxième (24) chaîne partielle, de façon à ce que l'unique caractère de la deuxième chaîne partielle (24) devienne le premier caractère ou
le dernier caractère de la première chaîne partielle (25) et le dernier caractère ou le premier caractère de la première chaîne partielle (25) devienne l'unique caractère de la deuxième chaîne partielle (24), et
répétition des étapes précédentes de façon à ce que la chaîne de données assignée au
jeton (23) soit restaurée,
transmission de la chaîne non cryptée de données au dispositif de traitement.

2. Procédé selon la revendication 1, **caractérisé en ce que** le dispositif de traitement est un dispositif d'interception sur un canal de données, qui exécute les étapes suivantes :
interception d'un ensemble de données transmis par l'intermédiaire du canal de données dans une première direction,
identification de la chaîne non cryptée de données importante pour la sureté dans l'ensemble de données intercepté,
transmission de la chaîne non cryptée de données importante pour la sureté au dispositif de jetonisation pour la création d'un jeton,
réception du jeton par le dispositif de jetonisation,
substitution de la chaîne non cryptée de données dans l'ensemble de données par le jeton et
transfert de l'ensemble de données avec le jeton par l'intermédiaire du canal de données.

3. Procédé selon la revendication 2, **caractérisé en ce que** l'ensemble de données est transféré par le dispositif d'interception vers un dispositif supplémentaire pour le traitement de l'ensemble de données, plus particulièrement un dispositif de stockage.

4. Procédé selon la revendication 2 ou 3, **caractérisé en ce que** le dispositif d'interception exécute les étapes suivantes :
interception d'un ensemble de données transmis par l'intermédiaire du canal de données dans une deuxième direction,
identification du jeton dans l'ensemble de données intercepté,
transfert du jeton au dispositif de jetonisation pour la restauration de la chaîne non cryptée de données,
réception de la chaîne non cryptée de données par le dispositif de jetonisation,
substitution du jeton dans l'ensemble de données par la chaîne non cryptée de données et
transmission de l'ensemble de données avec la chaîne non cryptée de données par l'intermédiaire du canal de données.

5. Procédé selon la revendication 2 ou 4, **caractérisé en ce que** l'identification de la chaîne non cryptée de données ou du jeton dans l'ensemble de données comprend une détermination de la longueur et de la position de la chaîne non cryptée de données ou du jeton.

6. Procédé selon l'une des revendications précédentes, **caractérisé en ce que** le nombre de répétitions des étapes du procédé lors de la création du jeton et lors de la restauration de la chaîne non cryptée de données est d'au moins n+1, de préférence 2n, n étant la longueur de la chaîne de données à remplacer.

7. Procédé implémenté par ordinateur selon l'une des revendications précédentes, **caractérisé en ce que** le calcul de l'index de la table de substitution comprend, pendant la création du jeton (23) ou la restauration de la chaîne non cryptée de données, comprend les étapes suivantes :
calcul d'une valeur de hachage (h) par l'application d'une fonction de hachage à une entrée binaire qui comprend la chaîne partielle de la chaîne de données qui contient plusieurs caractères,
détermination des x bits les plus significatifs de la valeur de hachage en tant qu'index pour le caractère de substitution à utiliser, x étant le nombre de bits nécessaires pour munir toutes les entrées de la table de substitution d'un index unique.

8. Procédé implémenté par ordinateur selon l'une des revendications précédentes, **caractérisé en ce que**, lors de la création du jeton (23), le caractère de substitution est calculé à partir de l'entrée déterminée par l'index et du caractère à remplacer.

9. Procédé implémenté par ordinateur selon l'une des revendications précédentes, **caractérisé en ce que**, lors de la restauration de la chaîne non cryptée de données (20), le caractère de substitution est calculé à partir de l'entrée déterminée par l'index et du caractère à remplacer.

10. Procédé implémenté par ordinateur selon l'une des revendications précédentes, dans la mesure où elle dépend des revendications 8 et 9, **caractérisé en ce que** les opérations de calcul du caractère de substitution utilisées lors de la création du jeton (23) et lors de la restauration de la chaîne non cryptée de données (20) sont des opérations mathématiques inverses l'une par rapport à l'autre.

11. Procédé implémenté par ordinateur selon l'une des revendications précédentes, **caractérisé en ce que** la chaîne de données à crypter est au moins une partie d'un numéro de compte ou d'un numéro de carte.

12. Procédé implémenté par ordinateur selon l'une des revendications précédentes, **caractérisé en ce que** le procédé est exécuté dans un serveur pour un système de paiement sans espèces.

13. Programme informatique avec code de programme pour l'exécution d'un procédé selon l'une des revendications précédentes.

14. Support de données lisible par une machine avec un programme informatique stocké sur celui-ci selon la revendication 13.

15. Dispositif de traitement de données sur lequel est chargé un programme informatique selon la revendication 13.
